# EUROPÄISCHE PATENTSCHRIFT

(11) **EP 1 451 543 B1**
(45) Veröffentlichungstag und Bekanntmachung des Hinweises auf die Patenterteilung: **03.03.2010**
(21) Anmeldenummer: 02805250.4
(22) Anmeldetag: 02.12.2002
(51) Int. Cl.: G01K 13/02

(54) **FÜHLERANORDNUNG MIT EINEM RASTBAREN FÜHLER**
SENSING DEVICE WITH A LOCKABLE SENSOR
SONDE AVEC UN DETECTEUR ENCLICTABLE

(30) Priorität: 06.12.2001 DE 10159869
(43) Veröffentlichungstag der Anmeldung: 01.09.2004
(73) Patentinhaber: EPCOS AG, 81669 München (DE)
(72) Erfinder: GRUNDMANN, Wolfgang, 16547 Birkenwerder (DE); NÄGELE, Remo, 12047 Berlin (DE)
(74) Vertreter: Epping - Hermann - Fischer
(86) Internationale Anmeldenummer: PCT/DE2002/004401
(87) Internationale Veröffentlichungsnummer: WO 2003/054496

(56) Entgegenhaltungen:
- EP-A- 0 508 891
- EP-A- 0 794 417

## Beschreibung

Die Erfindung betrifft einen Fühler mit einem Fühlerkörper, an dem ein Rastarm angeordnet ist und mit einem Kodierelement zur Definition der Einsteckorientierung.

Es sind Fühler der eingangs genannten Art bekannt, bei denen die Rastarme in einer Ebene angeordnet sind. In einer zu dieser Ebene senkrechten Ebene ist ein Kodierungselement angeordnet. Solche Fühler können in Gehäusebohrungen mit Kodierung eingeschoben und dort verrastet werden. Dabei weist die Gehäusebohrung eine Zusatzausnehmung auf, die zur Kodierung, also zur Definition der Einsteckorientierung des Fühlers in das Gehäuse dient. Der Fühler kann nur dann in das Gehäuse eingesteckt werden, wenn die Kodierung am Fühlerkörper an derselben Stelle wie die Kodierung an der Gehäusebohrung angeordnet ist.

Solche Fühler werden beispielsweise als Temperaturfühler verwendet. Temperaturfühler weisen an einem Ende des Fühlerkörpers ein NTC-Temperatursensorelement auf. Am anderen Ende des Fühlers ist eine Kontaktierungsvorrichtung vorgesehen, die von außen an den Fühler herangeführte Kabel mit dem Sensorelement elektrisch leitend verbindet. Beispielsweise können solche Fühler von außen in Gehäuse von Klimaanlagen eingesteckt werden, wo sie dann zur Temperaturmessung innerhalb der Klimaanlage eingesetzt werden.

Die Rastarme dienen dabei der sicheren Fixierung des Fühlers im Gehäuse.

Die bekannten Fühler haben den Nachteil, daß durch die Anordnung von Rastarm und Kodierung eine Herstellung des Fühlerkörpers mit der preiswerten Spritzgußtechnik nur relativ aufwendig möglich ist. Die Fühler müssen zweiteilig in Form von sogenannten "Klappfühlern" ausgebildet werden. Dazu wird die obere Hälfte und die untere Hälfte des Fühlers aufgeklappt gefertigt. Die beiden Hälften sind durch ein Filmscharnier miteinander verbunden und werden durch Zusammenklappen zu einem Fühlerkörper zusammengebaut.

Aus der Druckschrift DE-C1-19963912 ist eine Steckvorrichtung mit einer Rastvorrichtung bekannt. Im eingebauten Zustand der Steckvorrichtung in einem Aufnahmeteil sichert eine Steckernoppe die Steckervorrichtung gegen axiales Herauspressen aus dem Aufnahmeteil. Hierzu ist die Noppe in einer Nut des Aufnahmeteils. Beim Einbau der Steckvorrichtung wird die Noppe in einer axialen Nut des Aufnahmeteils geführt. Darüber hinaus ist ein federnder Rastarm mit einem Rasthaken vorgesehen, der zur Verrastung des Fühlers mit dem Gehäuse dient.

Aufgabe der vorliegenden Erfindung ist es daher, eine Fühleranordnung anzugeben, die einfach und preiswert herstellbar ist.

Diese Aufgabe wird gelöst durch eine Fühleranordnung nach Patentanspruch 1. Vorteilhafte Ausgestaltungen der Fühleranordnung sind den weiteren Patentansprüchen zu entnehmen.

Es wird ein Fühler angegeben, der zum Einstecken in die Bohrung eines Gehäuses vorgesehen ist und der einen Fühlerkörper aufweist. An dem Fühlerkörper ist ein federnder Rastarm angeordnet. Ferner weist der Fühler ein Kodierelement auf, das an dem Rastarm angeordnet ist.

Durch die Anordnung des Kodierelements am Rastarm des Fühlers kann erreicht werden, daß der Fühler einfach und billig durch ein Spritzgußverfahren in einem Stück herstellbar ist. Eine solche Herstellung kann beispielsweise in einer durch zwei Hälften gebildeten Form vorgenommen werden. Die Formtrennungslinie verläuft dabei in der Ebene, in der der Rastarm federt. Auf den Einsatz von Schiebern, wie sie zur Formung von speziellen Hohlräumen bei den bekannten Fühlern benötigt werden, kann verzichtet werden. Vielmehr können Hohlräume beziehungsweise Freiräume unter einem federnden Rastarm durch in die Form integrierte Vorsprünge hergestellt werden. Die beiden die Form bildenden Hälften können ohne weiteres nach dem Spritzgießen leicht wieder getrennt werden.

Der Rastarm kann an einer Schmalseite des Fühlerkörpers angeordnet sein, Dies hat den Vorteil, daß auch das Kodierelement an der Schmalseite des Fühlerkörpers angeordnet ist. Dadurch werden die neuerdings geforderten Kundenspezifikationen leicht erfüllbar, da gemäß diesen Spezifikationen die Kodierung im Gehäuse häufig an der Schmalseite der Gehäusebohrung angeordnet ist.

Darüber hinaus ist zwischen dem Rastarm und dem Fühlerkörper ein Freiraum zum Einfedern des Rastarms vorgesehen. Dies hat den Vorteil, daß der Rastarm ohne weiteres und ohne Behinderung durch den Fühlerkörper nach innen federn kann. Dieses Federn nach innen ist erforderlich, wenn der Fühler samt Rastarm in eine Bohrung eines Gehäuses eingeschoben werden soll. Um Einrasten zu können, muß der Rastarm sich nach innen biegen lassen.

Desweiteren ist es vorteilhaft, wenn der Rastarm eine schräg zur Steckrichtung nach innen verlaufende Außenkante aufweist. Entlang einer solchen Außenkante kann der Rastarm an der Kante einer Bohrung eines Gehäuse entlanggeschoben werden. Durch den schrägen Verlauf wird erreicht, daß die auf den Rastarm nach innen wirkende Kraft langsam erhöht wird, was zu einem gut kontrollierbaren Einsteckvorgang führt.

Der Fühler kann durch Einspritzen eines Kunststoffs in eine aus zwei Hälften gebildete Form hergestellt sein.

Dabei kann die Formtrennungslinie zwischen den beiden Hälften in derjenigen Ebene liegen, in der der Rastarm federt. Dadurch werden die bereits weiter oben beschriebenen Vorteile erzielt.

Das Kodierelement kann sich parallel zur Ebene der Formtrennungslinie erstrecken. In einer anderen Ausführungsform der Fühleranordnung kann sich das Kodierelement auch in der Ebene der Formtrennungslinie erstrecken.

Dadurch wird die Flexibilität beim Einsatz des Fühlers erhöht.

Das Kodierelement ist an der Außenseite des Rastarms angeordnet. Dadurch wird es einfach möglich, das Kodierelement so zu formen, daß es aus den Umrissen des Fühlerkörpers hervorsteht und somit seine Kodierfunktion erfüllen kann.

In einer weiteren Ausführungsform der Fühleranordnung kann auf der dem Rastarm gegenüberliegenden Seite des Fühlerkörpers ein zweiter Rastarm vorgesehen sein. Dadurch gelangt man zu einer im wesentlichen symmetrischen Ausführung des Fühlers, der nach dem Einstecken in die Bohrung eines Gehäuses an zwei Rastarmen und somit mechanisch stabiler verrastet ist.

Desweiteren kann das Kodierelement gegen die Steckrichtung gesehen aus der Außenkontur des Fühlers herausragender Vorsprung sein. Dieser Vorsprung kann beispielsweise die Form einer Rippe haben.

Desweiteren kann das Kodierelement an seinem in Steckrichtung gesehen vorderen Ende eine quer zur Steckrichtung und in Federrichtung des Rastarms verlaufenden Rand aufweisen. Ein solcher in Federrichtung verlaufender Rand bietet den Vorteil, daß ein Verschlechtern der Kodierung durch Zurückfedern des Rastarms und das Einschieben in einer nicht vorgesehenen Orientierung in ein Gehäuse vermieden werden kann. Der quer zur Steckrichtung und in Federrichtung verlaufende Rand bedeutet auch, daß keine Anlaufschräge an dem Kodierelement vorgesehen ist, was das Einstecken des Fühlers in falscher Orientierung mit sehr großer Sicherheit verhindern kann.

Desweiteren kann am Fühlerkörper ein Anschlag vorgesehen sein zur Begrenzung des Federwegs des Rastarms. Die Begrenzung des Federwegs des Rastarms ist vorteilhaft, um zu verhindern, daß das Kodierelement durch Einfedern des Rastarms vollständig nach innen gedrückt wird und somit seine Kodierfunktion nicht mehr übernehmen kann.

Dabei ist es vorteilhaft, wenn das Kodierelement so ausgebildet ist, daß es auch bei bis zum Anschlag nach innen gedrückten Rastarm entgegen die Steckrichtung gesehen aus der Außenkontur des Fühlerkörpers herausragt. So kann es auch bei voll eingedrücktem Rastarm noch seine Kodierfunktion übernehmen.

An dem in Steckrichtung gesehenen hinteren Ende des Rastarms kann eine Vertiefung vorgesehen sein, die zur Aufnahme einer Kante eines Gehäuses geeignet ist. Dadurch kann ein sicheres Verrasten des Fühlerkörpers mit dem Gehäuse erreicht werden.

Der Rastarm kann sich vom Fühlerkörper entgegen der Steckrichtung erstrecken. Dadurch kann ein sicheres Verrasten des Rastarms mit dem Gehäuse erreicht werden.

Es wird darüber hinaus ein Fühler angegeben, bei dem am in Steckrichtung gesehen vorderen Ende des Fühlerkörpers ein Sensorelement angeordnet ist und bei dem darüber hinaus an dem in Steckrichtung gesehenen hinteren Ende des Fühlerkörpers eine Kontaktierungsvorrichtung für Kabel vorgesehen ist. Das Sensorelement ist mit der Kontaktierungsvorrichtung elektrisch leitend verbunden.

Ein solcher Fühler hat den Vorteil, daß er nach dem Einbau des Fühlers in ein Gehäuse der in der Vorderseite des Fühlers integrierte Sensorelement von außen beispielsweise mittels eines Steckers oder mittels einer Schneid-Klemm-Verbindung elektrisch kontaktiert werden kann. Die elektrische Kontaktierung dient dabei zum Auslesen der vom Sensorelement gelieferten Sensorsignale.

Desweiteren kann zwischen dem Rastarm und der Kontaktierungsvorrichtung ein Flansch angeordnet sein, der zu einem noch besseren Abdichten der Verbindung zwischen dem Fühlerkörper und dem Gehäuse führt.

Es wird darüber hinaus eine Fühleranordnung angegeben, bei der neben einem der oben beschriebenen Fühler ein Gehäuse vorgesehen ist, bei der die Bohrung zwei Schmalseiten, aufweist. Die Kodierungsausnehmung ist an einer der Schmalseiten angeordnet. Der Fühler ist mit seinem Kodierelement durch die Kodierungsausnehmung geschoben und der Rastarm ist mit einer Kante des Gehäuses verrastet.

Eine solche Fühleranordnung hat den Vorteil, daß ein einfach durch Spritzgießen einteilig herstellbarer Fühler sicher und lagerichtig in einem Gehäuse eingesteckt ist.

Es wird darüber hinaus ein Verfahren zur Herstellung eines Fühlers angegeben, wobei der Fühler durch Spritzgießen-eines Kunststoffs in eine aus zwei Hälften gebildete Form hergestellt wird. Die beiden Hälften haben jeweils nach innen in die Form ragende Vorsprünge, die den oder die zum Federn der Rastarme benötigten Freiräume bilden. Die Vorsprünge können aus Metall, insbesondere aus Stahl bestehen.

Im folgenden wird die Erfindung anhand von Ausführungsbeispielen und den dazugehörigen Figuren näher erläutert.
- Figur 1: zeigt beispielhaft einen Fühler in einer ersten Seitenansicht.
- Figur 2: zeigt den Fühler aus Figur 1 in einer zweiten Seitenansicht.
- Figur 3: zeigt ein Gehäuse zum Einstecken des Fühlers in einer Draufsicht.
- Figur 4: zeigt den in das Gehäuse aus Figur 3 eingesteckten Fühler aus Figur 1 in einer Ansicht entgegen die Steckrichtung.
- Figur 5: zeigt einen weiteren beispielhaften Fühler in einer ersten Seitenansicht zusammen mit zwei Hälften einer Spritzgußform zur Herstellung des Fühlers.
- Figur 6: zeigt ein weiteres Gehäuse zum Einstecken des Fühlers.
- Figur 7: zeigt den in das Gehäuse aus Figur 6 eingesteckten Fühler aus Figur 5 in einer Ansicht entgegen die Steckrichtung.

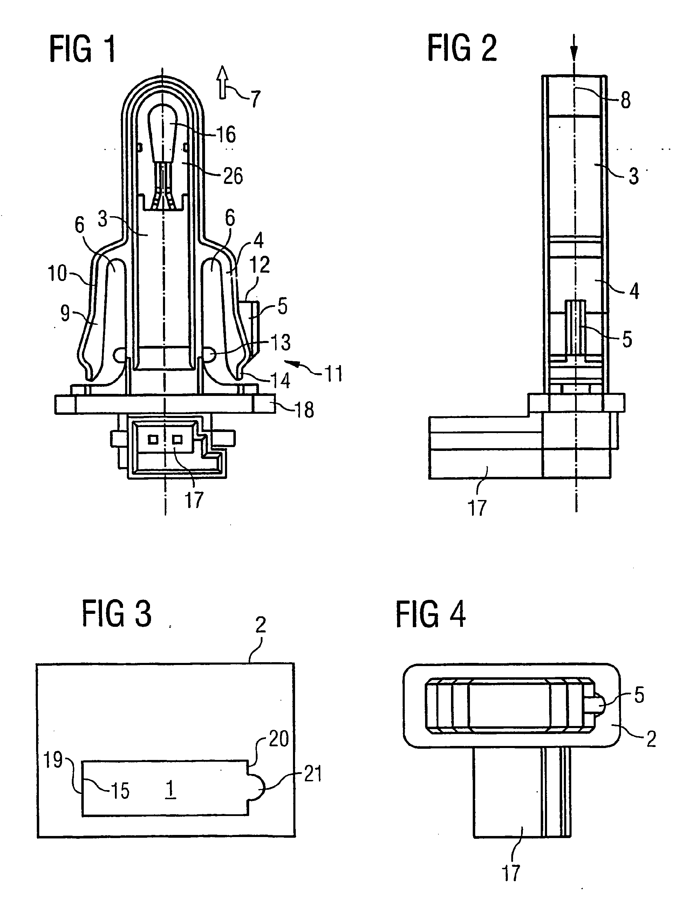

Figur 1 zeigt einen Fühler mit einem Fühlerkörper 3. Der Fühlerkörper 3 ist durch Spritzgießen hergestellt. Als Kunststoff zum Spritzgießen kommt beispielsweise PVC, PP oder auch Polyamid in Betracht. Seitlich am Fühlerkörper 3 sind an gegenüberliegenden Seiten Rastarme 4, 9 angeordnet. Am rechten Rastarm 4 ist ein Kodierelement 5 angeordnet. Das Kodierelement 5 befindet sich an der Außenseite des rechten Rastarms 4. Das Kodierelement 5 hat die Form einer nach außen stehenden Rippe. In Steckrichtung 7 gesehen am vorderen Ende des Kodierelementes 5 ist ein Rand 12 vorgesehen. Dieser Rand 12 verläuft quer zur Steckrichtung 7 und in Federrichtung 11 des rechten Rastarms 4. Zwischen den Rastarmen 4, 9 und dem Fühlerkörper 3 ist jeweils ein Freiraum 6 vorgesehen, der den Rastarmen 4, 9 Platz zum Federn nach innen läßt. Die Rastarme 4, 9 weisen eine Außenkante 10 auf, die schräg zur Steckrichtung 7 nach innen zum Fühlerkörper 3 hin verlaufen. Auf der Oberfläche des Fühlerkörpers 3 sind Anschläge 13 vorgesehen, die den Federweg der Rastarme 4, 9 begrenzen. An den in Steckrichtung 7 gesehen hinteren Enden der Rastarme 4, 9 sind Vertiefungen 14 angeordnet, die die Kante 15 der Bohrung 1 eines Gehäuses 2 gemäß Figur 3 aufnehmen können. In einem Loch 26 am in Steckrichtung gesehen vorderen Ende des Fühlerkörpers 3 ist ein Sensorelement 16 angeordnet. Dieses Sensorelement 16 kann beispielsweise ein NTC-Temperaturfühler sein. Am entgegengesetzten Ende des Fühlerkörpers 3 ist eine Kontaktierungsvorrichtung 17 vorgesehen, die mit dem Sensorelement 16 elektrisch leitend verbunden ist. Die Kontaktierungsvorrichtung 17 kann beispielsweise ein Stecker oder aber auch ein Schneid-Klemm-Kontakt sein. Zwischen den Rastarmen 4, 9 und der Kontaktierungsvorrichtung 17 ist ein Flansch 18 vorgesehen, der nach dem Einschieben des Fühlers in ein Gehäuse die Gehäuseöffnung zusätzlich abdichtet.

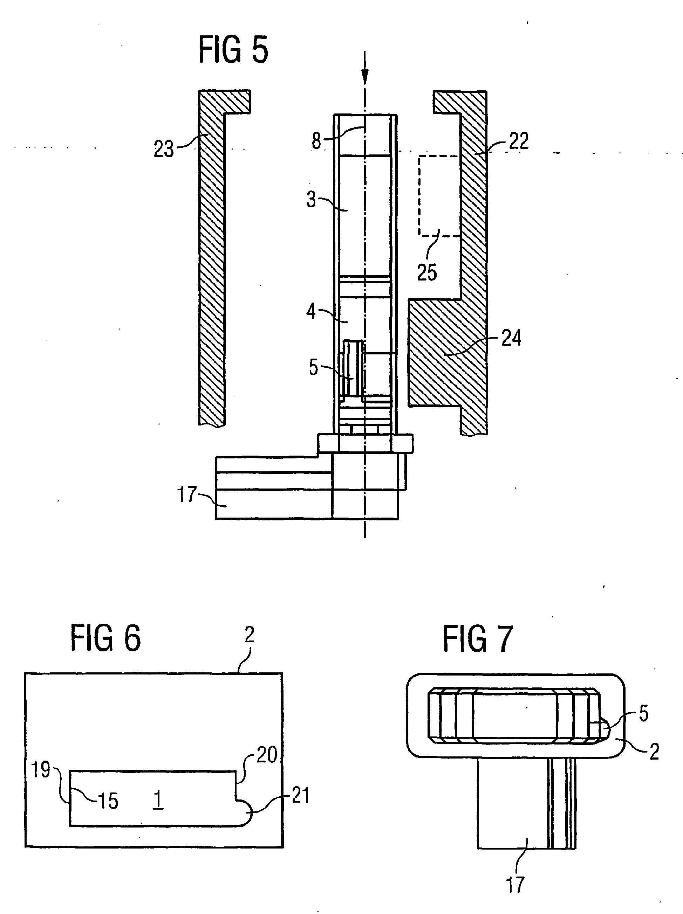

Figur 2 zeigt den Fühler aus Figur 1 in einer weiteren Seitenansicht. Figur 2 ist insbesondere die Formtrennungslinie 8 zu entnehmen, an der zwei Formen zum Spritzgießen des Fühlerkörpers 3 aneinander stoßen. Zwei beispielhafte Formen zur Bildung eines Fühlers werden in Figur 5 näher erläutert.

Figur 3 zeigt ein Gehäuse 2 mit einer Bohrung 1. Die Bohrung 1 weist zwei Schmalseiten 19, 20 auf. An einer der Schmalseiten 20 ist eine Kodierungsausnehmung 21 in Form eines halbrunden Lochs vorgesehen. In dieses Loch beziehungsweise Kodierungsausnehmung 21 muß das Kodierelement 5 aus Figur 1 eingeschoben werden, damit der Fühler lagerichtig in der Bohrung 1 des Gehäuses 2 zu liegen kommt.

Der in das Gehäuse 2 aus Figur 3 eingeschobene Fühler aus Figur 1 ist in Figur 4 dargestellt. Das Kodierelement 5 ist, wie aus Figur 2 hervorgeht, in der durch die Formtrennungslinie 8 definierte Formtrennungsebene der beiden Formen, aus denen der Fühler hergestellt ist, angeordnet. Das Kodierelement 5 ist mithin mittig an dem Rastarm 4 angeordnet. Dementsprechend ist die Kodierungsausnehmung 21 mittig an der Schmalseite 20 der Bohrung 1 angeordnet. Gemäß Figur 4 ist das Kodierelement 5 in die Kodierungsausnehmung 2 des Gehäuses eingeschoben.

Figur 5 zeigt einen weiteren Fühler in einer seitenansicht. Der Fühler gemäß Figur 5 entspricht im wesentlichen dem Fühler aus Figur 2, mit dem Unterschied, daß das Kodierelement 5 sich nicht mehr entlang der durch die Formtrennungslinie 8 definierten Ebene erstreckt. Vielmehr ist das Kodierelement 5 seitlich zu dieser Ebene versetzt. Desweiteren sind in Figur 5 zwei Hälften 22, 23 einer Spritzgußform im schematischen Querschnitt dargestellt. Die rechte Spritzgußform 22 verfügt in einer ersten Ebene über einen Vorsprung 25 (gestrichelt dargestellt), der zur Bildung des Lochs 26 geeignet ist, in dem das Sensorelement 16 angeordnet ist. Darüber hinaus weist die erste Hälfte 22 der Spritzgußform einen zweiten Vorsprung 24 auf, der zur Bildung eines Freiraums 6 zwischen einem Rastarm 4 und dem Fühlerkörper 3 geeignet ist. Figur 5 ist zu entnehmen, daß der Fühler durch einfaches Zusammenfügen von zwei Hälften 22,23 einer Spritzgußform durch Spritzguß hergestellt werden kann. Auf zusätzliche Einschübe beziehungsweise Schieber von außen in die Spritzgußform kann verzichtet werden, wodurch der Fühler besonders leicht und preiswert herzustellen ist.

Figur 6 zeigt ein Gehäuse entsprechend Figur 3 mit dem Unterschied, daß die Kodierungsausnehmung 21 nicht mittig an der Schmalseite 20, sondern im unteren Bereich der Schmalseite 20 angeordnet ist.

Die Positionierung der Kodierungsausnehmung 21 entspricht der Positionierung des Kodierelements 5 aus Figur 5, wodurch sich durch Einstecken des Fühlers aus Figur 5 in das Gehäuse 2 aus Figur 6 die in Figur 7 gezeigte Fühleranordnung ergibt, wo das außermittig positionierte Kodierelement 5 in die außermittig positionierte Kodierungsausnehmung 21 eingeschoben ist.

Die vorliegend beschriebene Erfindung ist nicht auf Temperaturfühler sowie nicht auf durch Spritzguß hergestellte Fühlerkörper beschränkt, sondern kann auf alle möglichen Fühler angewendet werden.

## Patentansprüche

1. Fühleranordnung
- mit einem rastbaren Fühler zum Einstecken in die Bohrung (1) eines Gehäuses (2)
- mit einem Fühlerkörper (3) aufweisend ein Sensorelement (16);
- mit einem federnden Rastarm (4,9) zur Verrastung des Fühlers mit dem Gehäuse(2), der am Fühlerkörper (3) angeordnet ist
- bei dem ein Kodierelement zur Definition der Einsteckorientierung am Rastarm (4,9) angeordnet ist und mit dem Rastarm (4,9) mitfedern kann,
- mit einem Gehäuse (2) aufweisend eine Bohrung (1) zum Einstecken des Fühlers,
- bei dem die Bohrung (1) eine Kodierungsausnehmung (21) aufweist,
- wobei das Kodierelement(5) beim Einstecken des Fühlers in das Gehäuse (2) durch die Kodierungsausnehmung (21) schiebbar ist.

2. Fühleranordnung nach Anspruch 1, bei der der Fühlerkörper (3) eine Schmalseite aufweist und der Rastarm (4, 9) an der Schmalseite des Fühlerkörpers (3) angeordnet ist.

3. Fühleranordnung nach einem der Ansprüche 1 bis 2, bei der zwischen dem Rastarm (4, 9) und dem Fühlerkörper (3) ein Freiraum (6) zum Einfedern des Rastarms (4, 9) vorgesehen ist.

4. Fühleranordnung nach einem der Ansprüche 1 bis 3, bei der der Rastarm (4, 9) eine schräg zur Steckrichtung (7) nach innen verlaufende Aussenkante (10) aufweist.

5. Fühleranordnung nach einem der Ansprüche 1 bis 4, die durch Spritzen eines Kunststoffs in eine aus zwei Hälften (22, 23) gebildete Form hergestellt ist.

6. Fühleranordnung nach Anspruch 5, bei der die Formtrennungslinie (8), entlang derer die Hälften (22, 23) der Form getrennt werden, in der Ebene verläuft, in der der Rastarm (4, 9) federt.

7. Fühleranordnung nach einem der Ansprüche 5 oder 6, bei der sich das Kodierelement (5) parallel zur Ebene der Formtrennungslinie (8) erstreckt.

8. Fühleranordnung nach einem der Ansprüche 5 bis 6, bei der sich das Kodierelement (5) in der Ebene der Formtrennungslinie (8) erstreckt.

9. Fühleranordnung nach einem der Ansprüche 1 bis 8, bei der das Kodierelement (5) an der Außenseite des Rastarms (4, 9) angeordnet ist.

10. Fühleranordnung nach einem der Ansprüche 1 bis 9, bei der auf der dem Rastarm (4, 9) gegenüberliegänden Seite des Fühlerkörpers (3) ein zweiter Rastarm (9) vorgesehen ist.

11. Fühleranordnung nach einem der Ansprüche 1 bis 10, bei der das Kodierelement (5) ein gegen die Steckrichtung (7) gesehen aus der Außenkontur des Fühlers herausragender Vorsprung ist.

12. Fühleranordnung nach einem der Ansprüche 1 bis 11, bei der das Kodierelement (5) an seinem in Steckrichtung (7) gesehen vorderen Ende einen quer zur Steckrichtung. (7) und in Federrichtung (11) des Rastarms (4, 9) verlaufenden Rand (12) aufweist.

13. Fühleranordnung nach einem der Ansprüche 1 bis 12, bei der am Fühlerkörper (3) ein Anschlag (13) zur Begrenzung des Federwegs des Rastarms (4, 9) vorgesehen ist.

14. Fühleranordnung nach seinem der Ansprüche 1 bis 13, bei der das Kodierelement (5) so ausgebildet ist, dass es auch bei bis zum Anschlag nach innen gedrücktem Rastarm (4, 9) entgegen der Steckrichtung (7) gesehen aus der Außenkontur des Fühlerkörpers (3) herausragt.

15. Fühleranordnung nach einem der Ansprüche 1 bis 14, bei der an den Enden des Rastarms (4, 9) eine Vertiefung (14) vorgesehen ist zur Aufnahme einer Kante (15) des Gehäuses (2).

16. Fühleranordnung nach einem der Ansprüche 1 bis 15, bei der der Rastarm (4, 9) sich vom Fühlerkörper (3) aus entgegen der Steckrichtung (7) erstreckt.

17. Fühleranordnung nach einem der Ansprüche 1 bis 16,
- bei der am in Steckrichtung (7) gesehen vorderen Ende des Fühlerkörpers (3) das Sensorelement (16) angeordnet ist,
- bei der am in Steckrichtung (7) gesehen hinteren Ende des Fühlerkörpers (3) eine Kontaktierungsvorrichtung (17) für Kabel vorgesehen ist,
- und bei der das Sensorelement (16) mit der Kontaktierungsvorrichtung (17) elektrisch leitend verbunden ist.

18. Fühleranordnung nach einem der Ansprüche 1 bis 17, bei der zwischen der Rastarm (4, 9) und der Kontaktierungsvorrichtung (17) ein Flansch (18) angeordnet ist.

19. Fühleranordnung nach einem der Ansprüche 1 bis 18, bei der die Bohrung (1) zwei Schmalseiten (19, 20) aufweist,
- bei der die Kodierungsausnehmung (21) an einer der Schmalseiten vorgesehen ist,
- bei der das Kodierelement (5) durch die Kodierungsausnehmung (21) geschoben und der Rastarm (4, 9) mit einer Kante (15) des Gehäuses (2) verrastet ist

## Claims

1. Sensor arrangement
- with a latchable sensor for insertion into the hole (1) in a housing (2),
- with a sensor body (3) having a sensor element (16),
- with a resilient latching arm (4, 9) which is intended to latch the sensor to the housing (2) and is arranged on the sensor body (3),
- in which a coding element for defining the insertion orientation is arranged on the latching arm (4, 9) and can spring with the latching arm (4, 9),
- with a housing (2) having a hole (1) for the insertion of the sensor,
- in which the hole (1) has a coding recess (21),
- the coding element (5) being able to be pushed through the coding recess (21) when inserting the sensor into the housing (2).

2. Sensor arrangement according to Claim 1, in which the sensor body (3) has a narrow side and the latching arm (4, 9) is arranged on the narrow side of the sensor body (3).

3. Sensor arrangement according to either of Claims 1 and 2, in which a clearance (6) for compressing the latching arm (4, 9) is provided between the latching arm (4, 9) and the sensor body (3).

4. Sensor arrangement according to one of Claims 1 to 3, in which the latching arm (4, 9) has an outer edge (10) which runs inwards obliquely with respect to the plug-in direction (7).

5. Sensor arrangement according to one of Claims 1 to 4, which is produced by injection-moulding a plastic into a mould formed from two halves (22, 23).

6. Sensor arrangement according to Claim 5, in which the mould parting line (8), along which the halves (22, 23) of the mould are parted, runs in the plane in which the latching arm (4, 9) springs.

7. Sensor arrangement according to either of Claims 5 and 6, in which the coding element (5) extends parallel to the plane of the mould parting line (8).

8. Sensor arrangement according to either of Claims 5 and 6, in which the coding element (5) extends in the plane of the mould parting line (8).

9. Sensor arrangement according to one of Claims 1 to 8, in which the coding element (5) is arranged on the outside of the latching arm (4, 9).

10. Sensor arrangement according to one of Claims 1 to 9, in which a second latching arm (9) is provided on that side of the sensor body (3) which is opposite the latching arm (4, 9).

11. Sensor arrangement according to one of Claims 1 to 10, in which the coding element (5) is a projection which, when seen counter to the the plug-in direction (7), protrudes from the outer contour of the sensor.

12. Sensor arrangement according to one of Claims 1 to 11, in which the coding element (5) has, at its end which is at the front when seen in the plug-in direction (7), an edge (12) which runs transversely to the plug-in direction (7) and in the spring direction (11) of the latching arm (4, 9).

13. Sensor arrangement according to one of Claims 1 to 12, in which a stop (13) for limiting the spring travel of the latching arm (4, 9) is provided on the sensor body (3).

14. Sensor arrangement according to one of Claims 1 to 13, in which the coding element (5) is designed in such a manner that it also protrudes from the outer contour of the sensor body (3), when seen counter to the plug-in direction (7), when the latching arm (4, 9) has been pushed inwards as far as the stop.

15. Sensor arrangement according to one of Claims 1 to 14, in which a depression (14) for receiving an edge (15) of the housing (2) is provided at the ends of the latching arm (4, 9).

16. Sensor arrangement according to one of Claims 1 to 15, in which the latching arm (4, 9) extends from the sensor body (3) counter to the plug-in direction (7).

17. Sensor arrangement according to one of Claims 1 to 16,
- in which the sensor element (16) is arranged at that end of the sensor body (3) which is at the front when seen in the plug-in direction (7),
- in which a contact-connection device (17) for cables is provided at that end of the sensor body (3) which is at the rear when seen in the plug-in direction (7),
- and in which the sensor element (16) is connected to the contact-connection device (17) in an electrically conductive manner.

18. Sensor arrangement according to one of Claims 1 to 17, in which a flange (18) is arranged between the latching arm (4, 9) and the contact-connection device (17).

19. Sensor arrangement according to one of Claims 1 to 18, in which the hole (1) has two narrow sides (19, 20),
- in which the coding recess (21) is provided on one of the narrow sides,
- in which the coding element (5) is pushed through the coding recess (21) and the latching arm (4, 9) is latched to an edge (15) of the housing (2).

## Revendications

1. Arrangement de sonde
- comprenant une sonde encliquetable à enficher dans le trou (1) d'un boîtier (2)
- comprenant un corps (3) de sonde ayant un élément (16) de capteur ;
- comprenant un bras (4, 9) élastique d'encliquetage qui est destiné à encliqueter la sonde au boîtier (2) et qui est disposé sur le corps (3) de la sonde
- dans lequel un élément de codage est disposé pour la définition de l'orientation d'enfichage sur le bras (4, 9) d'encliquetage et peut suivre élastiquement le bras (4, 9) d'encliquetage,
- comprenant un boîtier (2) ayant un trou (1) pour l'enfichage de la sonde,
- dans lequel le trou (1) a un évidemment (21) de codage,
- dans lequel l'élément (5) de codage peut, lorsque la sonde est enfichée dans le boîtier (2), coulisser dans l'évidement (21) de codage.

2. Arrangement de sonde suivant la revendication 1, dans lequel le corps (3) de la sonde a une face étroite et le bras (4, 9) d'encliquetage est disposé sur la face étroite du corps (3) de la sonde.

3. Arrangement de sonde suivant l'une des revendications 1 à 2, dans lequel un espace (6) libre pour l'escamotage du bras (4, 9) d'encliquetage est prévu entre le bras (4, 9) d'encliquetage et le corps (3) de la sonde.

4. Arrangement suivant l'une des revendications 1 à 3, dans lequel le bras (4, 9) d'encliquetage a un bord (10) extérieur s'étendant vers l'intérieur en étant incliné par rapport à la direction (7) d'enfichage.

5. Arrangement suivant l'une des revendications 1 à 4, qui est fabriqué dans un moule formé de deux moitiés (22, 23) par moulage par injection d'une matière plastique.

6. Arrangement suivant la revendication 5, dans lequel la ligne (8) de séparation du moule, le long de laquelle les deux moitiés (22, 23) du moule sont séparées, s'étend dans le plan dans lequel le bras (4, 9) d'encliquetage fait ressort.

7. Arrangement suivant l'une des revendications 5 ou 6, dans lequel l'élément (5) de codage s'étend parallèlement au plan de la ligne (8) de séparation du moule.

8. Arrangement suivant l'une des revendications 5 à 6, dans lequel l'élément (5) de codage s'étend dans le plan de la ligne (8) de séparation du moule.

9. Arrangement suivant l'une des revendications 1 à 8, dans lequel l'élément (5) de codage est disposé sur la face extérieure du bras (4, 9) d'encliquetage.

10. Arrangement suivant l'une des revendications 1 à 9, dans lequel un deuxième bras (9) d'encliquetage est prévu sur la face du corps (3) de sonde opposée au bras (4, 9) d'encliquetage.

11. Arrangement suivant l'une des revendications 1 à 10, dans lequel l'élément (5) de codage est une saillie dépassant, vue dans le sens contraire au sens (7) d'enfichage, du contour extérieur de la sonde.

12. Arrangement suivant l'une des revendications 1 à 11, dans lequel l'élément (5) de codage a à son extrémité avant, vue dans le sens (7) d'enfichage, un bord (12) transversal au sens (7) d'enfichage et s'étendant dans la direction (11) d'élasticité du bras (4, 9) d'encliquetage.

13. Arrangement suivant l'une des revendications 1 à 12, dans lequel une butée (13) de limitation de la course élastique du bras (4, 9) d'encliquetage est prévue sur le corps (3) de la sonde.

14. Arrangement suivant l'une des revendications 1 à 13, dans lequel l'élément (5) de codage est constitué de façon à faire saillie, vue dans le sens contraire au sens (7) d'enfichage, du contour extérieur du corps (3) de la sonde, même quand le bras (4, 9) d'encliquetage est repoussé vers l'intérieur jusqu'en butée.

15. Arrangement suivant l'une des revendications 1 à 14, dans lequel il est prévu aux extrémités du bras (4, 9) d'encliquetage une cavité (14) de réception d'un bord (15) du boîtier (2).

16. Arrangement suivant l'une des revendications 1 à 15, dans lequel le bras (4, 9) s'étend à partir du corps (3) de la sonde dans le sens contraire au sens (7) d'enfichage.

17. Arrangement suivant l'une des revendications 1 à 16,
- dans lequel l'élément (16) de capteur est disposé à l'extrémité avant du corps (3) de la sonde, vue dans la direction (7) d'enfichage,
- dans lequel un dispositif (17) de mise en contact d'un câble est prévu à l'extrémité arrière du corps (3) de la sonde dans le sens (7) d'enfichage,
- et dans lequel l'élément (16) de capteur est relié d'une manière conductrice de l'électricité au dispositif (17) de mise en contact.

18. Arrangement suivant l'une des revendications 1 à 17, dans lequel une bride (18) est disposée entre le bras (4, 9) d'encliquetage et le dispositif (17) de mise en contact.

19. Arrangement suivant l'une des revendications 1 à 18, dans lequel le trou (1) a deux faces (19, 20) étroites,
- dans lequel l'évidement de codage est prévu sur l'une des faces étroites,
- dans lequel l'élément (5) de codage est poussé dans l'évidement (21) de codage et le bras (4, 9) d'encliquetage est encliqueté avec un bord (15) du boîtier (2).
